# EUROPEAN PATENT APPLICATION

(11) **EP 4 683 262 A1**
(43) Date of publication of application: **21.01.2026**
(21) Application number: 25190535.2
(22) Date of filing: 18.07.2025
(51) Int. Cl.: H04L 5/00, H04B 7/02

(54) **METHOD, APPARATUS AND COMPUTER PROGRAM**

(30) Priority: 19.07.2024 GB 202410577
(71) Applicant: Nokia Technologies Oy, 02610 Espoo (FI)
(72) Inventor: HAKOLA, Sami-Jukka, 90540 Oulu (FI); KARJALAINEN, Juha Pekka, 88600 Sotkamo (FI); KOSKELA, Timo, 90670 Oulu (FI)
(74) Representative: Page White Farrer

(57) **Abstract**

There is provided an apparatus, method, and computer program for causing the apparatus to perform: obtaining, from a network access node, downlink control information comprising an indication to switch from an old transmission configuration indicator, TCI, state to a new TCI state, wherein the new TCI state comprises a configuration identifying at least one new channel state information, CSI, reference signal resource(s) for periodic CSI reference signal reporting.

## Description

### FIELD

The present application relates to periodic channel state information (CSI) measurements and/or periodic CSI reporting.

### BACKGROUND

A communication system can be seen as a facility that enables communication sessions between two or more entities such as user terminals, base stations and/or other nodes by providing carriers between the various entities involved in the communications session. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (Universal Mobile Telecommunications Service terrestrial radio access network (e.g., 3G radio)). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to a first aspect, there is provided an apparatus comprising means for: obtaining, from a network access node, downlink control information comprising an indication to switch from an old transmission configuration indicator, TCI, state to a new TCI state, wherein the new TCI state comprises a configuration identifying at least one new channel state information, CSI, reference signal resource(s) for periodic CSI reference signal reporting.

According to a second aspect, there is provided an apparatus comprising: at least one processor; and at least one memory comprising code that, when executed by the at least one processor, causes the apparatus to perform: obtaining, from a network access node, downlink control information comprising an indication to switch from an old transmission configuration indicator, TCI, state to a new TCI state, wherein the new TCI state comprises a configuration identifying at least one new channel state information, CSI, reference signal resource(s) for periodic CSI reference signal reporting.

According to a third aspect, there is provided a method for an apparatus, the method comprising: obtaining, from a network access node, downlink control information comprising an indication to switch from an old transmission configuration indicator, TCI, state to a new TCI state, wherein the new TCI state comprises a configuration identifying at least one new channel state information, CSI, reference signal resource(s) for periodic CSI reference signal reporting.

According to a fourth aspect, there is provided an apparatus comprising: obtaining circuitry for obtaining, from a network access node, downlink control information comprising an indication to switch from an old transmission configuration indicator, TCI, state to a new TCI state, wherein the new TCI state comprises a configuration identifying at least one new channel state information, CSI, reference signal resource(s) for periodic CSI reference signal reporting.

According to a fifth aspect, there is provided an apparatus comprising means for: maintaining at least one first mapping that maps an old transmission control indicator, TCI, state to an old reference signal and a new TCI state to a new reference signal, wherein the old and new reference signals have different beam directions; receiving an indication of a TCI state for changing an active TCI state from the old TCI state to the new TCI state; based on the received TCI state indication for changing an active TCI state from the old TCI state to the new TCI state, identifying at least one new channel state information-reference signal, CSI-RS, resource(s) that are associated with the new reference signal; performing measurements for periodic CSI-RS reporting on the at least one new CSI-RS resource(s); determining that a next transmission occasion for performing periodic CSI reference signal reporting is within a predetermined time of applying said new TCI state; and based on said determining, causing a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state.

According to a sixth aspect, there is provided an apparatus comprising: at least one processor; and at least one memory comprising code that, when executed by the at least one processor, causes the apparatus to perform: maintaining at least one first mapping that maps an old transmission control indicator, TCI, state to an old reference signal and a new TCI state to a new reference signal, wherein the old and new reference signals have different beam directions; receiving an indication of a TCI state for changing an active TCI state from the old TCI state to the new TCI state; based on the received TCI state indication for changing an active TCI state from the old TCI state to the new TCI state, identifying at least one new channel state information-reference signal, CSI-RS, resource(s) that are associated with the new reference signal; performing measurements for periodic CSI-RS reporting on the at least one new CSI-RS resource(s); determining that a next transmission occasion for performing periodic CSI reference signal reporting is within a predetermined time of applying said new TCI state; and based on said determining, causing a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state.

According to a seventh aspect, there is provided a method for an apparatus, the method comprising: maintaining at least one first mapping that maps an old transmission control indicator, TCI, state to an old reference signal and a new TCI state to a new reference signal, wherein the old and new reference signals have different beam directions; receiving an indication of a TCI state for changing an active TCI state from the old TCI state to the new TCI state; based on the received TCI state indication for changing an active TCI state from the old TCI state to the new TCI state, identifying at least one new channel state information-reference signal, CSI-RS, resource(s) that are associated with the new reference signal; performing measurements for periodic CSI-RS reporting on the at least one new CSI-RS resource(s); determining that a next transmission occasion for performing periodic CSI reference signal reporting is within a predetermined time of applying said new TCI state; and based on said determining, causing a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state.

According to an eighth aspect, there is provided an apparatus comprising: maintaining circuitry for maintaining at least one first mapping that maps an old transmission control indicator, TCI, state to an old reference signal and a new TCI state to a new reference signal, wherein the old and new reference signals have different beam directions; receiving circuitry for receiving an indication of a TCI state for changing an active TCI state from the old TCI state to the new TCI state; identifying circuitry for, based on the received TCI state indication for changing an active TCI state from the old TCI state to the new TCI state, identifying at least one new channel state information-reference signal, CSI-RS, resource(s) that are associated with the new reference signal; performing circuitry for performing measurements for periodic CSI-RS reporting on the at least one new CSI-RS resource(s); determining circuitry for determining that a next transmission occasion for performing periodic CSI reference signal reporting is within a predetermined time of applying said new TCI state; and causing circuitry for, based on said determining, causing a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state.

According to a ninth aspect, there is provided an apparatus comprising means for: receiving a first message comprising an indication of a TCI state for changing an active TCI state from an old TCI state to a new TCI state, wherein the first message comprises an identification of at least one second channel state information reference signal, CSI-RS, resource(s); extracting an identification of at least one new CSI-RS resource(s) from the first message; performing measurements for periodic CSI-RS reporting on the at least one new CSI-RS resource(s); determining that a next transmission occasion for performing periodic CSI reference signal reporting is within a predetermined time of applying said new TCI state; and based on said determining, causing a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state.

According to a tenth aspect, there is provided an apparatus comprising: at least one processor; and at least one memory comprising code that, when executed by the at least one processor, causes the apparatus to perform: receiving a first message comprising an indication of a TCI state for changing an active TCI state from an old TCI state to a new TCI state, wherein the first message comprises an identification of at least one second channel state information reference signal, CSI-RS, resource(s); extracting an identification of at least one new CSI-RS resource(s) from the first message; performing measurements for periodic CSI-RS reporting on the at least one new CSI-RS resource(s); determining that a next transmission occasion for performing periodic CSI reference signal reporting is within a predetermined time of applying said new TCI state; and based on said determining, causing a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state.

According to an eleventh aspect, there is provided a method for an apparatus, the method comprising: receiving a first message comprising an indication of a TCI state for changing an active TCI state from an old TCI state to a new TCI state, wherein the first message comprises an identification of at least one second channel state information reference signal, CSI-RS, resource(s); extracting an identification of at least one new CSI-RS resource(s) from the first message; performing measurements for periodic CSI-RS reporting on the at least one new CSI-RS resource(s); determining that a next transmission occasion for performing periodic CSI reference signal reporting is within a predetermined time of applying said new TCI state; and based on said determining, causing a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state.

According to a twelfth aspect, there is provided an apparatus comprising: receiving circuitry for receiving a first message comprising an indication of a TCI state for changing an active TCI state from an old TCI state to a new TCI state, wherein the first message comprises an identification of at least one second channel state information reference signal, CSI-RS, resource(s); extracting circuitry for extracting an identification of at least one new CSI-RS resource(s) from the first message; performing circuitry for performing measurements for periodic CSI-RS reporting on the at least one new CSI-RS resource(s); determining circuitry for determining that a next transmission occasion for performing periodic CSI reference signal reporting is within a predetermined time of applying said new TCI state; and causing circuitry for, based on said determining, causing a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state.

The following may apply in respect of any (e.g., one or more, including all) of the above first to twelfth aspects.

The apparatus may be caused to perform using the at least one new CSI reference signal resource(s) for performing CSI acquisition.

The apparatus may be caused to perform: performing at least one measurement on the at least one new CSI reference signal resource(s); and periodically reporting the at least one measurement and/or a signal quality metric determined using the at least one measurement to the network access node.

The apparatus may be caused to perform: determining that a next transmission occasion for performing periodic CSI reference signal reporting is within a predetermined time of applying said new TCI state; and based on said determining, causing a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state.

According to a thirteenth aspect, there is provided an apparatus comprising means for: providing, to a user equipment, downlink control information comprising an indication to switch from an old transmission configuration indicator, TCI, state to a new TCI state, wherein the new TCI state comprises a configuration identifying at least one new channel state information, CSI, reference signal resource for periodic CSI reference signal reporting by the user equipment.

According to a fourteenth aspect, there is provided an apparatus comprising: at least one processor; and at least one memory comprising code that, when executed by the at least one processor, causes the apparatus to perform: providing, to a user equipment, downlink control information comprising an indication to switch from an old transmission configuration indicator, TCI, state to a new TCI state, wherein the new TCI state comprises a configuration identifying at least one new channel state information, CSI, reference signal resource for periodic CSI reference signal reporting by the user equipment.

According to a fifteenth aspect, there is provided a method for an apparatus, the method comprising: providing, to a user equipment, downlink control information comprising an indication to switch from an old transmission configuration indicator, TCI, state to a new TCI state, wherein the new TCI state comprises a configuration identifying at least one new channel state information, CSI, reference signal resource for periodic CSI reference signal reporting by the user equipment.

According to a sixteenth aspect, there is provided an apparatus comprising: providing circuitry for providing, to a user equipment, downlink control information comprising an indication to switch from an old transmission configuration indicator, TCI, state to a new TCI state, wherein the new TCI state comprises a configuration identifying at least one new channel state information, CSI, reference signal resource for periodic CSI reference signal reporting by the user equipment.

The following may apply in respect of any (e.g., one or more, including all) of the above thirteenth to sixteenth aspects.

The apparatus may be caused to perform: obtaining periodic CSI reference signal reporting of at least one measurement on the new CSI reference signal resources and/or a signal quality metric corresponding to the at least one measurement.

**The** apparatus may be caused to perform: using the periodic CSI reference signal reporting to determine at least one communication parameter for communications between the apparatus and the user equipment on a beam corresponding to the new TCI state; and communicating with the user equipment using the at least one communication parameter.

**The** following may apply in respect of any (e.g., one or more, including all) of the above first to sixteenth aspects.

**The** identification of the at least one new CSI reference signal resource(s) may be comprised in the same signalling as the new TCI state.

**The** identification of the at least one new CSI reference signal resource(s) may be comprised in different signalling to the new TCI state.

The identification of at least one previous CSI reference signal resource and/or the identification of the at least one new CSI reference signal resource(s) may be comprised a media access control message.

**The** at least one new CSI reference signals resource(s) may be periodic in time and/or frequency.

**The** old TCI state may comprise a configuration identifying at least one old channel state information, CSI, reference signal resource(s) for periodic CSI reference signal reporting, and wherein the at least one old CSI reference signal resource(s) may correspond to a first beam direction and the at least one new CSI reference signal resource(s) may correspond to a second beam direction.

The apparatus may be caused to perform: maintaining at least one first mapping that maps the old transmission control indicator, TCI, state to an old reference signal and the new TCI state to a new reference signal, wherein the old and new reference signals have different beam directions.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows a representation of a network system according to some example embodiments;
Figure 2 shows a representation of a control apparatus according to some example embodiments;
Figure 3 shows a representation of an apparatus according to some example embodiments;
Figure 4 illustrates quasi co-location between a source signal and a target signal;
Figure 5 illustrates example signalling; and
Figures 6 to 12 illustrate example methods.

### DETAILED DESCRIPTION

**The** following describes operations that may be performed in relation to measurements for periodic channel state information (CSI) reference signal (RS) measurements and/or periodic CSI-RS reporting.

In particular, the following considers how, currently, periodic CSI-RS reporting cannot be performed by user equipment (UE) that have undergone a TCI state change as there are no suitable CSI-RS resources available on which measurements may be performed. Features of the following disclose ways in which CSI-RS resources for performing measurements for periodic CSI-RS reporting may be identified by apparatus disclosed herein. Features of the following further consider what the apparatus disclosed herein may report at different reporting occasions for periodic CSI-RS reporting, depending on when the TCI state change is applied at the UE.

Before further details of the presently described features are considered, the following describes an example communication environment and example apparatus in which the presently described techniques may be deployed. It is understood that this is not limiting.

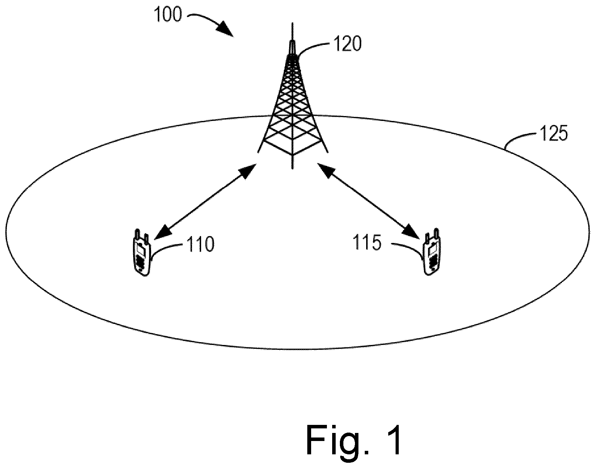

Figure 1 shows an example communication environment 100 in which example embodiments of the present disclosure can be implemented.

In the communication environment 100, a plurality of communication devices, comprising user devices 110 and 115 (also referred to herein as a "terminal" or "terminal device") and a network device 120 (also referred to herein as a "network access node"), can communicate with each other. The network device 120 may serve a coverage area, called a cell 125. The user device 110 may have access to a communication network via the cell 125. In some example embodiments, both the user device 110 and the network device 120 may be configured to implement a beamforming technique and communicate with each other via a plurality of beams.

The term "terminal device" refers to any end device that may be capable of wireless communication. By way of example rather than limitation, a terminal device may also be referred to as a communication device, user equipment (UE), a Subscriber Station (SS), a Portable Subscriber Station, a mobile device, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), a machine-type communications (MTC) device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user device", "user equipment" and "UE" may be used interchangeably.

As used herein, the term "network device" is used interchangeably with "network access node", and refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

In some example embodiments, a link from the network device 120 to the user device 110 or 115 is referred to as a DL, while a link from the user device 110 or 115 to the network device 120 is referred to as a UL. Links are also referred to herein as "channels". In DL, the network device 120 is a Tx device (or a transmitter), and the user device 110 or 115 is a Rx device (or a receiver). In UL, the user device 110 or 115 is a Tx device (or a transmitter), and the network device 120 is a Rx device (or a receiver). A link between the user device 110 and another user device (not shown) is referred to as a sidelink (SL). In SL, one of the user devices is a Tx device (or a transmitter), and the other of the user devices is a Rx device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

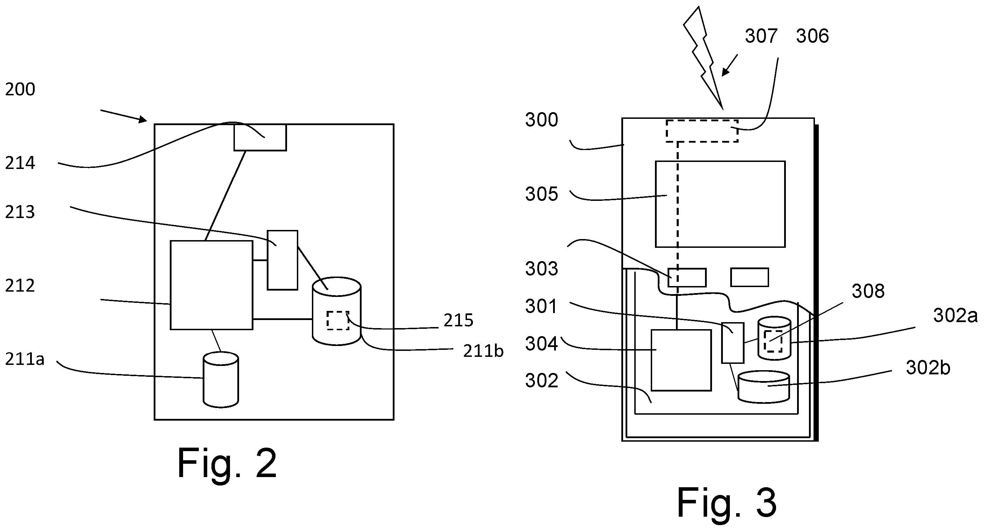

Figure 2 illustrates an example of a control apparatus 200 for causing a network device 120 (such as the network device described in Figure 1) to perform its operations. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the network device. In some embodiments, each function of the network device comprises a control apparatus 200. In some exemplary embodiments, the apparatus 200 may be implemented at the network device 120 or may be the network device 120. It is understood in the following that the term "network access node" is used interchangeably with "control apparatus" and/or "network device", and so may be understood to be as described in connection with Figures 1 and 2.

Figure 3 illustrates an example of a terminal 300, such as the user device 110, 115 illustrated on Figure 1. The terminal 300 may be provided by any device capable of sending and receiving radio signals, such as the user device described herein. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems (such as a network access system provided by the network device described above in relation to Figures 1 and 2) and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

In some exemplary embodiments, the terminal 300 may be an apparatus comprising at least one processor and at least one memory storing instructions that, when executed by the at least one processor, cause a user device 110, 115 to perform examples or embodiments described in this document. It is understood in the following that references to a "UE" or "user equipment" are used interchangeably with "terminal", and so may be understood to be as described in connection with Figures 1 and 3.

A UE, such as described above in connection with Figures 1 and 3, may communicate with a network access node using a plurality of antennas. It is understood that the term "antenna" is being used here to indicate a transmit chain, and may include any other component comprised in transmitting a signal.

Signals transmitted using these plurality of antenna may experience channel degradation, with different antenna and different antenna combination being associated with respective channel degradation conditions (e.g., radio channel properties). Stated differently, how a signal degrades as it is transmitted from a UE to a network access node may depend on the transmit chain of the UE that is used to transmit that signal. For example, when different transmit chain of the UE are each associated with a respective beam direction, how a signal degrades as it is transmitted from a UE to a network access node may depend on the direction of transmission associated with the transmit chain used.

Some examples of channel degradation conditions that may be common across the antenna ports are discussed below.
- **Doppler Shift:** Doppler shift is a shift in the frequency of the radio signal relative to motion of the receiver. For example, when a network access node transmits a radio signal of a frequency "X", this may be received at a UE with a frequency of "Y" when the UE is traveling away from or travelling to the network access node.
- **Doppler Spread:** Doppler Spread relates to a broadening of a frequency spectrum of a narrow-band signal transmitted through a multipath propagation channel. Doppler spread occurs as a result of the different Doppler shift frequencies associated with the multiple propagation paths when there is relative motion between the transmitter and the receiver.
- **Average Delay:** When signal is transmitted from multiple antenna, it reaches a receiver through multiple path reflect from surrounding clutter. This is known as multi-path transmissions. In multi-path scenarios, the average time taken to receive all the multi-path components at the receiver is known as Average Delay.
- **Delay Spread:** Delay spread refers to the difference between the time of arrival of the earliest significant multi path component (which may comprise a line of sight (LOS) component) and the time of arrival of the last multi path component.
- **Spatial Receiver Parameter:** Spatial Receiver Parameter refers to Beam Forming properties of Downlink received signal, such as, for example dominant Angle of Arrival, average Angle of Arrival at UE.

To help mitigate against such channel degradation conditions, a UE may make measurements on channel state information-reference signals (CSI-RS) in order to identify the type and degree of channel degradation experienced on the downlink channels. Stated differently, a UE may make measurements on downlink reference signals in order to identify the type and degree of channel degradation experienced by signals received on different receive chains (e.g., received on different antenna and/or different combination of antenna).

In more detail, a CSI-RS is a downlink reference signal that is used by a UE for measuring various radio channel quality metrics (e.g., reference signal receive power (RSRP), reference signal receive quality (RSRQ), signal to interference and noise ratio (SINR), etc.). Values indicated the measured radio channel quality metrics may be subsequently reported to a network access node. The measured radio channel quality metrics may be used by the UE and/or by the network access node for setting at least one transmission and/or reception parameter with the aim of ameliorating a signal quality metric associated with signal transmission and/or reception. For example, the measured radio channel quality metrics may be used for selecting at least one of a modulation scheme, code rate, beam forming, etc. It is understood that although a CSI-RS may be used for beam forming, and other beam management properties, that beam management is not limited to being performed on such reference signals.

CSI-RS is used in 5G for a plurality of purposes, including beam measurements (e.g., for beam management methods), time and frequency tracking as well as, channel state information (CSI) acquisition. In practical deployments, CSI-RSs for CSI acquisition (e.g. codebook based DL MIMO) are operated in a cell specific manner, i.e. the same UE specific CSI-RS configuration is shared with larger number of UEs.

The network access node may provide the UE with information identifying which CSI-RS the network access node is using by comprising this message in a radio resource control (RRC) message that is sent to the UE.

Measurements made on the CSI-RS may be reported periodically (e.g., using the physical uplink control channel) and/or aperiodically (e.g., using the physical uplink shared channel).

In general, for periodic and aperiodic CSI reporting, a user equipment (UE) receives a CSI measurement configuration from a network access node, which may indicate the total number of CSI-RS antenna ports and a resource configuration (e.g., a time-frequency resource configuration). The UE may subsequently measure received signal power for each antenna port and select (and report on) a set of antenna ports based on these measurements.

However, there exist situations in which at least one of the channel degradation conditions experienced when transmitting by a first antenna of the UE is similar to at least one of the channel degradation conditions experienced when transmitting by a second antenna of the UE. In such a situation, the network access node and/or UE may exploit this similarity when determining parameters for uplink transmission by grouping together "similar" antennas and causing at least some common set of uplink transmission parameters to be used within that group of antennas. This grouping together of antennas for such a purpose is also referred to as quasi-colocation (QCL).

3GPP has defined QCL as per the following: "Two antenna ports are said to be quasi co-located if properties of the channel over which a symbol on one antenna port is conveyed can be inferred from the channel over which a symbol on the other antenna port is conveyed".

QCL-based methods may help a UE with channel estimation, frequency offset error estimation and synchronization procedures, and setting receive and transmit beam properly. In more detail, when a UE knows that the channel degradation conditions corresponding to two different antenna ports is QCL in terms of Doppler shift, then UE can determine Doppler shift for one antenna port and then apply the result on both antenna ports for channel estimation. This avoids the UE to calculate doppler for both antenna port separately. Similar principles may be applied in respect of any of the above-mentioned channel degradation conditions.

Various combinations of these channel degradation conditions have been grouped together to form various quasi-co-location QCL types. For example, QCL-TypeA refers to QCL that comprises doppler shift, doppler spread, average delay and delay spread, QCL-TypeB refers to QCL that comprises doppler shift and doppler spread, QCL-TypeC refers to QCL that comprises average delay and doppler shift, and QCL-TypeD refers to QCL that comprises a spatial parameter.

Which QCL-Type is applied between two antenna is determined by a combination of a transmission control indicator reference signal (TCI-RS)-Set and a demodulation reference signal (DMRS) (see, for example, TS 38.214 - 5.1.5 Antenna ports quasi co-location", which details a mapping between QCL-Type and TCI-RS-Set"

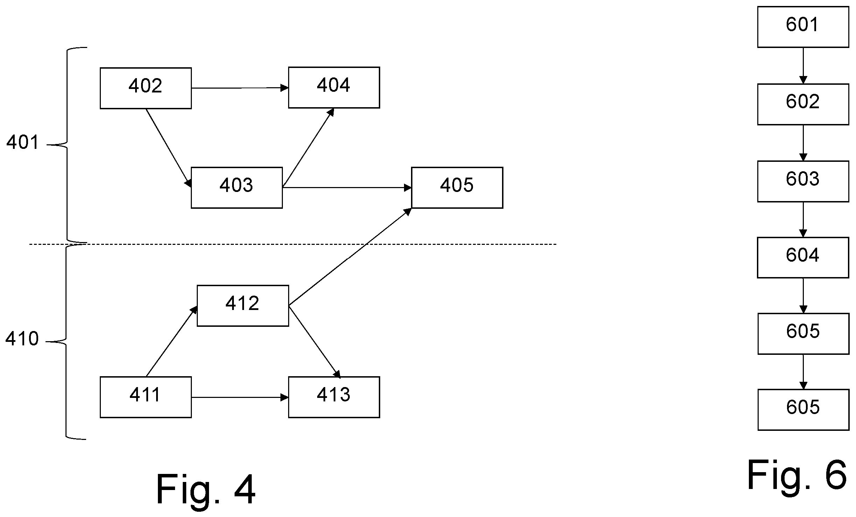

It is noted that QCL techniques are not limited to grouping together only uplink antenna together or only downlink antenna together. For example, a combination of uplink and downlink antenna may be grouped together where their channel degradation properties are similar. This is illustrated below in Figure 4.

Figure 4 illustrates QCL relations between a source signal and a target signal in accordance with 5G specifications. In general, the term "source signal" is used herein to indicate a signal whose channel degradation properties are to be measured for calculating parameters for addressing at least one channel degradation effect, and the term "target signal" is used herein to indicate a signal that is received and/or transmitted using at least one of said parameters. Stated differently, the target signal is a signal to be received and/or transmitted that is QCL with the source signal, The source signal described herein is often a reference signal, such as a periodic channel state indictor reference signal (CSI-RS).

401 relates to methods that may be performed by a UE on a downlink signal, while 410 relates to methods that may be performed by that UE for an uplink signal.

401 illustrates a source signal 402 (such as, for example, a downlink reference signal) received from a network access node being passed to processing 403 for estimating at least one channel degradation condition. For example, the processing 403 may estimate, for the source signal 402, at least one of: a doppler spread of that source signal, a doppler shift of that source signal, an average delay of that source signal, a delay spread for that source signal, or a receive beam spatial filter for that source signal. The UE may subsequently use these estimated parameter(s) for performing receiving operations of a subsequently received target signal 404 that is QCL with the source signal 402. The receive beam spatial filter estimate for the source signal may also be stored 405 for beam management purposes. Beam management relates to techniques at the physical-layer and medium access control-layer for supporting the acquisition and maintenance of directional beams. Beam management techniques also comprise initial access procedures for initially accessing a beam for ensuring successful directional transmission. For example, a UE may perform a beam sweep within an initial search space to identify a plurality of beams transmitted by a network access node, and may select at least one of those beams as a "best" beam over which the UE would like to connect to the network access node.

410 illustrates a source signal 411 (such as, for example, a downlink reference signal) received from a network access node being passed to processing 412 for estimating at least one channel degradation condition. For example, the processing 403 may estimate, for the source signal 402, at least one of: a transmit beam spatial filter; or a transmission power pathloss. The UE may subsequently use these estimated parameter(s) for determining how to transmit a target signal 413 that is QCL with the source signal 411. The transmit beam spatial filter estimate for the source signal may also be stored 405 for beam management purposes.

Looking towards future 3GPP specifications (e.g., 6G and beyond), Rel17 and Rel18 defined a unified transmission control indicator (TCI) framework that is to provide a UE with QCL source reference signals for both downlink reception and uplink transmission of target signals for beam management purposes. The main principle behind this framework is to cause target signals and channels to follow one or two indicated TCI state(s). Indicated TCI state(s) can be switched dynamically by using media access control (MAC) or downlink control information (DCI) based signaling.

However, based on current 3GPP new radio specifications, periodic CSI-RS signals (which are currently used for determining QCL) do not follow indicated TCI states. This means that the switching of the QCL source for the periodic CSI-RS can only be performed by radio resource control (RRC) signaling according to current 3GPP specifications. This may lead to relatively long switching times, which is unlikely to be deployed during beam management procedures in which TCI states are frequently changed for measuring different beams.

One method of addressing this would be to simply change the 3GPP specifications to allow switching of QCL source for a periodic CSI-RS resource to follow indicated TCI state (e.g., in a similar way to aperiodic resources).

However**,** this does not work in practise for periodic CSI-RS reporting resources. This is because the CSI-RS resources for measurements performed for periodic CSI-RS reporting are cell-specific rather than UE-specific, meaning that they are used by a plurality of other UEs in a cell. In other words, in one typical network deployment periodic, CSI-RSs are configured to be "cell-specific" (e.g., so that the same CSI-RS resource(s) are configured to plurality of different UEs), while the TCI-switching is UE-specific. Stated differently, the same CSI-RS transmission resources are used by high number of other UEs in a cell while the switching of the indicated TCI state is a UE-specific operation. Consequently, setting the periodic CSI-RS to follow an indicated TCI state (which is a UE-specific change) would not allow periodic CSI-RSs to be operated in a cell-specific manner.

The following aims to address at least one of the above-mentioned problems.

In more detail, the following describes methods in which, when a TCI state of a UE is dynamically switched, the switching mechanism also causes the UE to change periodic CSI-RS resource used for the UE for performing measurements for periodic CSI-RS reporting. The change of periodic CSI-RS resources would be to periodic CSI-RS resources that would have the same QCL assumption as for the QCL source reference signal of the indicated TCI state. Stated differently, in the following description, each TCI state is associated with both a 'QCL source reference signal' (e.g., that is used for beam acquisition and management purposes) and a 'CSI-RS resource' (e.g., that is used for measurements for periodic CSI-RS reporting). Using the terminology of Figure 4, the "QCL source reference signal" may be considered as a source signal and to the target "CSI-RS" resource. Each CSI-RS resource may be identified via a corresponding CSI-RS resource index.

For example, when a UE moves to a new beam of a network access node, the network access node changes the indicated TCI state corresponding to the new beam. In such a case, the periodic CSI-RS resource being used by the UE for CSI acquisition corresponding to the old beam is switched to a new periodic CSI-RS resource corresponding to the new beam.

The change in TCI state may cause the UE to change periodic CSI-RS resources in any of a plurality of different ways.

In a first example, a UE may be preconfigured with a mapping that maps a TCI state (or a source reference signal corresponding to that TCI state) to respective periodic CSI-RS resources. In such a case, the UE may use the mapping to find out which periodic CSI-RS resources correspond to the new indicated TCI state of the new beam.

As discussed above, in current specifications, a UE is provided with a mapping that maps each TCI state of a plurality of TCI states to a respective (e.g., corresponding) source reference signal, each source reference signal being associated with a different downlink beam direction. This example is different in that either the existing mapping is extended that further links periodic CSI-RS resources to two or more (e.g., six or more) of the configured TCI states and/or the source reference signal, or there exists another mapping at the UE, that further links periodic CSI-RS resources to two or more (e.g., six or more) of the configured TCI states and/or the source reference signal.

In a second example, the TCI state change indication may comprise a field that enumerates, or otherwise identifies (e.g., explicitly identifies) the periodic CSI-RS resources that corresponds to the indicated TCI state of the new beam. Stated differently, the TCI state change indication may comprise an explicit identifier of the periodic CSI-RS resources that correspond to the new TCI state.

In a third example, the TCI states configured at a UE may be provided with respective indications of at least one CSI-RS resource that are to be used for periodic CSI-RS measurements and/or reporting. In such a case, when a TCI state change indication is received for causing a UE to change its active TCI state, the UE applies the preconfigured TCI state configuration for the new TCI state, which includes the use of the at least one CSI-RS resource in that configuration. In this case, the at least one CSI-RS resource may not be QCL with the source reference signal associated with that TCI state. This third example may be considered as a more specific form of the first example (e.g., of mapping).

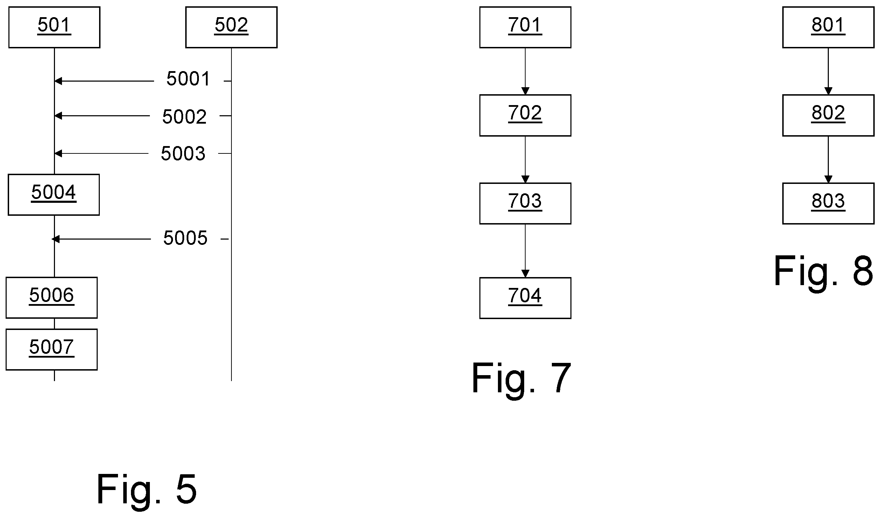

Example signalling that illustrates methods that may be performed by apparatus described herein is provided in Figure 5.

Figure 5 illustrates signalling that may be performed between a UE 501 and a network access node 502.

During 5001, the network access node 502 signals the UE 501. This signalling may comprise a configuration of CSI-RS resources that may be used by the UE for CSI acquisition.

During 5002, the network access node 502 signals the UE 501. This signalling may comprise a configuration of TCI states. In more detail. This signalling may comprise a configuration of TCI states in which each TCI state is mapped to a CSI-RS resource for CSI acquisition.

During 5003, the network access node 502 signals the UE 501. This signalling may comprise an indication of current TCI states for a beam received by the UE 501 from the network access node 502 (and/or for a beam received by the UE 501 from another network access node when the UE is in a multi-transmit-receiver-point (mTRP) configuration).

During 5004, the UE 501 performs CSI measurements on CSI-RS resources that correspond to the indicated TCI states. Stated differently, during 5004, the UE 501 performs measurements on CSI-RS resources that correspond to the indicated TCI states for CSI-RS resources used for transmission by the network access node 502. The measurements may be measurements according to a previous configuration for periodic CSI-RS reporting.

During 5005, the network access node 502 signals the UE 501. This signalling of 5005 may comprise an indication of current TCI states for a beam received by the UE 501 from the network access node 502 (and/or for a beam received by the UE 501 from another network access node when the UE is in a multi-transmit-receiver-point (mTRP) configuration). This signalling may cause the UE 501 to switch its active TCI state (e.g., the TCI currently being used for communications) at the UE 501 to a TCI state identified in the signalling of 5005.

Where the beam of 5005 is different to the beam of 5003, the signalling of 5005 may be performed after the UE 501 has been caused to switch from the beam of 5003 to a new beam. This signalling may be performed during a switching operation that ultimately causes the UE 501 to switch from the beam of 5003 to a new beam.

During 5006, the UE waits for a predetermined time after receiving the signalling of 5005 prior to performing 5007. The predetermined time may be set by a 3GPP specification (or some other communication protocol specification), and/or by an operator of the network access node 502.

The predetermined time may be an application time that is the same as for the new indicated TCI state. The predetermined time (e.g., the application time) may have a duration that allows enough time for the UE to apply the new CSI-RS resource for CSI measurements after the next CSI report instance.

During 5007, the UE 501 performs CSI measurements on CSI-RS resources that correspond to the indicated TCI states of 5005. Stated differently, during 5007, the UE 501 performs measurements on CSI-RS resources that correspond to the indicated TCI states for CSI-RS resources used for transmission by the network access node 502 at that time. Each of the indicated TCI states of 5005 may be associated with respective CSI-RS resources for periodic CSI-RS measurements and/or reporting. The UE may report the results of the measurements to the network access node 502 using periodic CSI-RS reporting transmission occasions. The results of the measurements may identify which measurements correspond to which TCI state.

Figure 6 considers a method performed by the UE 501 when the signalling of Figure 5 is performed.

During 601, the UE 501 receives (e.g., obtains) the periodic CSI-RS resources of 5001.

During 602, the UE 502 receives the TCI state configuration of 5002.

During 603, the UE receives an indication of first current indicated TCI state(s), as described in 5003.

During 604, the UE 501 performs CSI measurements from the CSI-RS resource corresponding to the first current indicated TSI state(s) of 603. This may be as described in 5004.

During 605, the UE receives an indication of second current indicated TCI state(s), as described in 5005. The second current indicated TCI state(s) are different to the first current TCI state(s).

During 606, the UE 501 performs CSI measurements from the CSI-RS resource corresponding to the second current indicated TSI state(s) of 603. 606 may be performed after waiting a predetermined time. This may be as described in 5006 to 5007.

It is understood that the above-described method of Figures 5 and 6 is not the only way in which the presently described techniques may be implemented.

For example, as discussed above, a TCI state may be configured explicitly with a CSI-RS resource for CSI acquisition and not as a QCL source, as per the example of Figures 5 and 6. The TCI state configuration may have been configured at the apparatus prior to any TCI state change configuration. In this case, upon dynamic switching of indicated TCI state, the UE would also implicitly switch the CSI-RS resource for CSI acquisition to correspond to one in the new indicated TCI state. In other words, each TCI state may be configured with a periodic CSI-RS resource (as well as a source RS resource), where the periodic CSI-RS resource has the same beam direction as the source RS resource of the TCI state. The UE may then follow the new periodic CSI-RS resource in the indicated TCI state.

In another example, the dynamic switching command of the indicated TCI state (which may be, for example, comprised in DCI) may explicitly indicate periodic CSI-RS resource index associated with CSI acquisition (which is among the CSI-RS resources configured for the UE). In other words, a network access node may dynamically indicate a new periodic CSI-RS resource corresponding to the new beam direction in the MAC or DCI together with the new indicated TCI state. The UE may then follow the new periodic CSI-RS resource together with the indicated TCI state.

In another example, when the UE is configured with a TCI state that does not include the periodic CSI RS for CSI acquisition or the absence of the configuration of the periodic CSI resource, the UE may assume that any reporting configuration for periodic CSI-RS reporting is not active for when the TCI state is the indicated TCI state.

Figures 7 to 12 illustrate different features of the above. It is therefore understood that at least one of the following described features may find functional correspondence in at least one feature mentioned above. It is further understood that the above description may provide further context for the presently described features.

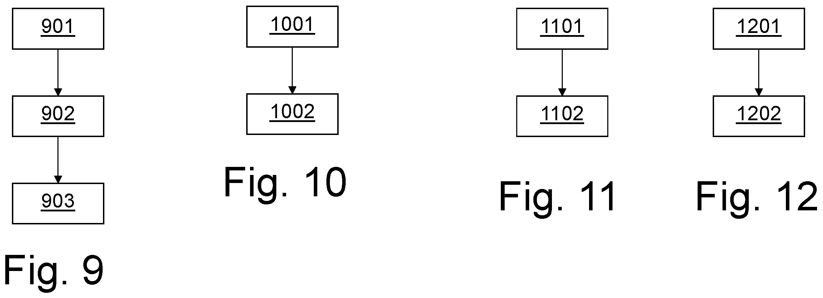

In the following, Figures 7 to 10 consider methods that may be performed for informing an apparatus of which CSI-RS resources (e.g., to use for periodic CSI-RS reporting on a new TCI state), and Figures 11 and 12 consider methods that may be performed for performing periodic CSI-RS reporting.

Figures 7 and 8 illustrate methods that may be performed by interacting apparatus.

Figure 7 illustrates a method that may be performed by an apparatus such as a UE. The apparatus may be configured as described above in connection with Figure 3.

During 701, the apparatus maintains at least one first mapping that maps a first transmission control indicator, TCI, state to a first reference signal and a second TCI state to a second reference signal, wherein the first and second reference signals have different beam directions.

In general, the at least one first mapping may map each TCI state of a plurality of TCI states to a respective (e.g., corresponding) reference signal. The reference signal(s) (e.g., the first reference signal and the second reference signal) may be usable, when their corresponding TCI state is being used as an active TCI state by the apparatus, for beam management purposes, as discussed above. For example, the reference signal(s) may be considered as a source reference signal for another QCL signal, such as for a physical uplink channel. The at least one first mapping may have been configured at the apparatus by the network access node of Figure 8.

During 702, the apparatus receives an indication of a TCI state for changing an active TCI state from the first TCI state to the second TCI state. An active TCI state may be considered as a TCI state that is currently applied at a UE. Stated differently, during 702, the apparatus receives an indication of the second TCI state when the apparatus is configured such that its active TCI state is the first TCI state. Reception of the indication of the TCI state may cause the apparatus to change its active TCI state from the first TCI state to the second TCI state. Stated differently, reception of the indication of the TCI state of 702 may cause the apparatus to apply the second TCI state at the apparatus. As mentioned above, the second TCI state is associated with a second reference signal, which has a different beam direction to the first reference signal associated with the first TCI state. The indication of the TCI state may be obtained from (e.g., received from) the network access node of Figure 8. The TCI state change indication may be for changing the active TCI state in that receipt of the TCI state indication causes the UE to apply the second TCI state instead of the first TCI state (which was previously prepared).

During 703, based on the received TCI state indication for changing an active TCI state of the apparatus from the first TCI state to the second TCI state, the apparatus identifies at least one second channel state information-reference signal, CSI-RS, resource(s) that are associated with the second reference signal.

The at least one second CSI-RS resource(s) may be associated with the second reference signal in a plurality of different ways. For example, the at least one second CSI-RS resource(s) may be associated with the second reference signal in that they are both associated with a same TCI state by the apparatus (e.g., via a mapping stored at the apparatus, and/or via the TCI state configuration for the second TCI state that is stored at the apparatus), and/or that the at least one second CSI-RS resource(s) are QCL with the second reference signal (or otherwise follow a same beam direction as each other).

703 may be performed in any of a plurality of different ways.

For example, 703 may be performed by using the received identification of the second TCI state in the indication to look up the second CSI-RS resource(s) via second mapping that is already preconfigured at the apparatus. The second mapping may map the second CSI-RS resource(s) to the second reference signal (e.g., because they have beams in similar directions and/or are otherwise considered to be QCL). As another example, the second mapping may directly map the CSI-RS resource(s) to the second TCI state (e.g., the second mapping may be an extension to the first mapping). The at least one second mapping may have been configured at the apparatus by the network access node of Figure 8. The second mapping may be configured at the same time as the first mapping. The second mapping may be configured at a different time as the first mapping. For example, the second mapping may be configured using different fields and/or different signalling to the fields and/or signalling used for configuring the first mapping.

This example is illustrated via the following. Prior to receiving the indication of the TCI state for changing an active TCI state from the first TCI state to the second TCI state, the apparatus may maintain at least one second mapping that maps the second TCI state and/or the second reference signal to the at least one second CSI-RS resource(s). The apparatus may use an identification of the second TCI state provided in the received indication of the TCI state for changing an active TCI state from the first TCI state to the second TCI state to identify the at least one second CSI-RS resource(s) in the at least one second mapping. The apparatus may use the at least one first mapping and the at least one second mapping to identify the at least one second CSI-RS resource(s).

As another example of how 703 may be performed, the indication of the active TCI state for changing an active TCI state from the first TCI state to the second TCI state may identify (e.g., explicitly identify) the at least one second CSI-RS resource(s).

Stated differently, the apparatus may extract an identification of the at least one second CSI-RS resource(s) from the received indication comprising the TCI state for changing an active TCI state from the first TCI to the second TCI. To this effect, the indication of the TCI state for changing an active TCI state may comprise a field in which the at least one second CSI-RS resource(s) are enumerated, and/or otherwise identified (e.g., by an index value).

The at least one second CSI-RS resource(s) may be used for a different purpose than the second reference signal. For example, the second reference signal may be used for initial beam access purposes, and the at least one second CSI-RS resource(s) may be used for performing measurements for periodic CSI-RS reporting. As discussed above, the at least one CSI-RS resource(s) may be considered as periodic CSI-RS resource(s).

During 704, the apparatus performs measurements for periodic CSI-RS reporting on the at least one second CSI-RS resource(s).

The apparatus may further perform periodic CSI-RS reporting based on measurements performed on the at least one second CSI-RS resource(s). Stated differently, the apparatus may signal periodic CSI-RS reporting to the network access node of Figure 8, where the at periodic CSI-RS reporting comprises measurements performed on the at least one second CSI-RS resource(s).

As mentioned above, the at least one mapping may comprise a plurality of TCI states. In such a case, receipt of further TCI state indications for changing an active TCI state to a new TCI state may cause an analogous method to be performed as per claim 1, but in respect of the new TCI state.

For example, the apparatus may receive an indication of a TCI state for changing an active TCI state from the second TCI state to a third TCI state, wherein the at least one first mapping maps the third TCI state to a third reference signal, the third reference signal having a different beam direction to the first and second reference signals. Based on the received TCI state indication for changing an active TCI state from the second TCI state to the third TCI state, the apparatus may identify at least one third CSI-RS resource(s) that are associated with the third reference signal. Further, the apparatus may perform measurements for periodic CSI-RS reporting on the at least one third CSI-RS resource(s).

It is further understood that the above-mentioned second mapping and/or the above-mentioned TCI state indication extraction method may be used for determining the at least one third CSI-RS resource(s).

For example, prior to receiving the indication of the TCI state for changing an active TCI state from the second TCI state to the third TCI state, the apparatus may maintain at least one second mapping that maps the third TCI state and/or the third reference signal to the at least one third CSI-RS resource(s), and use an identification of the third TCI state provided in the received indication of the TCI state for changing an active TCI state from the second TCI state to the third TCI state to identify the at least one third CSI-RS resource(s) in the at least one second mapping. The apparatus may use the at least one first mapping and the at least one second mapping to identify the at least one third CSI-RS resource(s).

As another example, the apparatus may extract an identification of the third TCI state from the received indication comprising the TCI state for changing an active TCI state from the second TCI to the third TCI.

As a further example, the apparatus may be caused to determine when, after a TCI state change, a next transmission opportunity is scheduled for transmitting a periodic CSI-RS report, and to determine whether to report measurements based on the CSI-RS resources associated with the previous active TCI state or to report measurements based on CSI-RS resources associated with a current active TCI state.

For example, with reference to the example of the change from the second TCI state to the third TCI state, the apparatus may, when a next transmission occasion for performing periodic CSI-RS reporting occurs after a predetermined time duration of applying the third TCI state, perform periodic CSI-RS reporting based on measurements performed on the at least one third CSI-RS resource(s). Further, when a next transmission occasion for performing periodic CSI-RS reporting occurs within a predetermined time duration of applying the third TCI state, the apparatus may perform periodic CSI-RS reporting based on measurements performed on the at least one second CSI-RS resource corresponding to the first TCI state. The predetermined duration may correspond to the above-mentioned application time.

It is understood that a similar mechanism may be applied in respect of a change in active TCI state from the first TCI state (having associated first CSI-RS resources for periodic CSI-RS reporting) to the second TCI state (having associated second CSI-RS resources for periodic CSI-RS reporting).

Figure 8 illustrates a method that may be performed by an apparatus. The apparatus may be an apparatus of a network access node, such as described in relation to Figure 2. The network access node may be the network access node described in connection with Figure 7.

During 801, the apparatus maintains at least one first mapping that maps a first transmission control indicator, TCI, state to a first reference signal and a second TCI state to a second reference signal, wherein the first and second reference signals have different beam directions. This may be as described above in relation to 701 (except that the apparatus may be configured with the at least one first mapping via a network operator, and/or via a radio access network-based apparatus).

During 802, the apparatus provides (e.g., transmits), to a user equipment, an indication of a TCI state for changing an active TCI state from the first TCI state to the second TCI state. The indication may be as described above in relation to 702). The user equipment may comprise the apparatus of Figure 7.

During 803, the apparatus receives periodic channel state information-reference signal, CSI-RS, reporting from the user equipment based on measurements performed on at least one second CSI-RS resource identified using the TCI state indication for changing an active TCI state from the first TCI state to the second TCI state, wherein the at least one second CSI-RS resource(s) are associated with the second reference signal.

Analogous to the above example of Figure 7, the apparatus of Figure 8 may, prior to providing the indication of the TCI state for changing an active TCI state from the first TCI state to the second TCI state, maintain at least one second mapping that maps the second TCI state and/or the second reference signal to the at least one second CSI-RS resource(s), and provide the at least one second mapping to the user equipment prior to providing the indication of the TCI state for changing an active TCI state from the first TCI state to the second TCI state.

Similarly, the apparatus of Figure 8 may provide an identification of the second TCI state in a first message providing the indication of the TCI state for changing an active TCI state from the first state to the second state.

The apparatus of Figure 8 may provide (e.g., to the apparatus of Figure 7) an indication of a TCI state for changing an active TCI state from the second TCI state to a third TCI state, wherein the at least one first mapping maps the third TCI state to a third reference signal, the third reference signal having a different beam direction to the first and second reference signals. The apparatus of Figure 8 may receive periodic channel state information-reference signal, CSI-RS, reporting from the user equipment based on measurements performed on at least one third CSI-RS resource(s) identified using the TCI state for changing an active TCI state indication from the second TCI state to the third TCI state, wherein the at least one third CSI-RS resource(s) are quasi co-located with the third reference signal.

The apparatus of Figure 8 may, prior to providing the indication of the TCI state for changing an active TCI state from the second TCI state to the third TCI state, maintain at least one second mapping that maps the third TCI state and/or the third reference signal to the at least one third CSI-RS resource(s), and provide the at least one second mapping to the user equipment prior to providing the indication of the TCI state for changing an active TCI state from the second TCI to the third TCI.

The apparatus may provide an identification of the at least one third CSI-RS resource(s) in a second message comprising the indication of the TCI state for changing an active TCI state from the second TCI to the third TCI. As mentioned above in connection with Figure 7, this identification may be explicit (e.g., comprise an enumerated field that identifies the at least one third CSI-RS resource(s)).

The apparatus of Figure 8 may use the periodic CSI-RS reporting to determine at least one communication parameter for communications between the apparatus and the user equipment on a first beam corresponding to the first TCI state, and communicate with the user equipment via the first beam using the at least one communication parameter. Similarly, the apparatus of Figure 8 may use the periodic CSI-RS reporting to determine at least one communication parameter for communications between the apparatus and the user equipment on a second beam corresponding to the second TCI state, and communicate with the user equipment via the second beam using the at least one communication parameter. Similarly, the apparatus of Figure 8 may use the periodic CSI-RS reporting to determine at least one communication parameter for communications between the apparatus and the user equipment on a third beam corresponding to the third TCI state, and communicate with the user equipment via the third beam using the at least one communication parameter.

In any (e.g., one or more, including all) of the methods of Figures 7 and 8, the TCI state indication for changing an active TCI state from the first TCI state to the second TCI state may be comprised in downlink control information.

In any (e.g., one or more, including all) of the methods of Figures 7 and 8, the at least one second CSI-RS resource may be at least one of the following: the at least one second CSI-RS resource may be a periodic CSI-RS resource; the at least one second CSI-RS resource may be configured for CSI reporting; or the at least one second CSI-RS resource may be a periodic CSI-RS resource and the periodic CSI-RS resource may be configured for CSI reporting.

In any (e.g., one or more, including all) of the methods of Figures 7 and 8, the at least one second CSI-RS resource(s) are quasi co-located with the second reference signal.

Figures 9 and 10 illustrate methods that may be performed by interacting apparatus. The examples of Figures 9 and 10 highlight how an apparatus may be informed regarding which CSI-RS resources are to be used for performing CSI-RS resources for measurements for periodic CSI-RS reporting.

Figure 9 illustrates a method that may be performed by an apparatus such as a UE. The apparatus may be configured as described above in connection with Figure 9.

During 901, the apparatus receives a first message comprising an indication of a transmission configuration indicator, TCI, state for changing an active TCI state from a first TCI state to a second TCI state, wherein the first message comprises an identification of at least one second channel state information reference signal, CSI-RS, resource(s). The indication of the TCI state change may be as described above in relation to Figure 7.

During 902, the apparatus extracts an identification of at least one second CSI-RS resource(s) from the first message.

The first message may comprise an enumerated value that identifies the at least one second CSI-RS resource(s). Stated differently, information explicitly identifying the at least one second CSI-RS resource(s) identification may be explicitly comprised in the message comprising an indication of the TCI state of 901. The extracted identification may comprise an index value, and the apparatus further comprises means for using the index value to lookup the at least one second CSI-RS resource(s).

During 903, the apparatus performs measurements for periodic CSI-RS reporting on the at least one second CSI-RS resource(s).

The apparatus of Figure 9 may maintain at least one first mapping that maps a first transmission control indicator, TCI, state to a first reference signal and a second TCI state to a second reference signal, wherein the first and second reference signals have different beam directions. This may be as described above in relation to Figure 7.

The apparatus of Figure 9 may perform a further TCI state change operation that effectively repeats the steps of Figure 7 except in respect of a new TCI state.

For example, the apparatus of Figure 9 may receive a second message comprising an indication of a TCI state for changing an active TCI state from the second TCI state to a third TCI state, wherein the second message comprises an identification of at least one third channel state information reference signal, CSI-RS, resource(s), extract an identification of at least one third CSI-RS resource(s) from the second message, and perform measurements for periodic CSI-RS reporting on the at least one third CSI-RS resource(s).

The apparatus may, when a next transmission occasion for performing periodic CSI-RS reporting occurs after a predetermined time duration of applying the third TCI state, perform periodic CSI-RS reporting based on measurements performed on the at least one third CSI-RS resource(s).

The apparatus may, when a next transmission occasion for performing periodic CSI-RS reporting occurs within a predetermined time duration of applying the third TCI state, perform periodic CSI-RS reporting based on measurements performed on the at least one second CSI-RS resource corresponding to the second TCI state.

The apparatus may perform periodic CSI-RS reporting based on measurements performed on the at least one second CSI-RS resource(s).

Figure 10 illustrates a method that may be performed by an apparatus. The apparatus may be an apparatus of a network access node, such as described in relation to Figure 2. The network access node may be the network access node described in connection with Figure 9.

During 1001, the apparatus provides, to a user equipment (e.g., the apparatus of Figure 9), a first message comprising an indication of a transmission control indicator, TCI, state for changing an active TCI state from a first TCI state to a second TCI state, wherein the indication of the TCI state for changing an active TCI state from the first TCI state to the second TCI state the first message comprises an identification at least one second channel state information reference signal (CSI-RS) resource. This may be as described above in connection with Figure 7.

During 1002, the apparatus obtains periodic channel state information-reference signal, CSI-RS, reporting from the user equipment based on measurements performed on the at least one second CSI-RS.

The apparatus of Figure 10 may maintain at least one first mapping that maps a first transmission control indicator, TCI, state to a first reference signal and a second TCI state to a second reference signal, wherein the first and second reference signals have different beam directions. This may be as described above.

The at least one second CSI-RS resource(s) may be quasi co-located with the second reference signal.

The first message and the identification may be as described in connection to Figure 9. For example, the first message may comprise an enumerated value that identifies the at least one second CSI-RS resource(s). The identification may comprise an index value, and the apparatus may further use the index value to lookup the at least one second CSI-RS resource(s).

The apparatus of Figure 10 may perform the actions of Figure 10 with respect to a new TCI state. For example, the apparatus of Figure 10 may provide a second message comprising an indication of a TCI state for changing an active TCI state from the second TCI state to a third TCI state, wherein the second message comprises an identification of at least one third CSI-RS resource(s), and obtain periodic channel state information-reference signal, CSI-RS, reporting from the user equipment based on measurements performed on the at least one third CSI-RS.

The apparatus of Figure 10 may use the periodic CSI-RS reporting to determine at least one communication parameter for communications between the apparatus and the user equipment on a second beam corresponding to the second TCI state, and communicate with the user equipment via the second beam using the at least one communication parameter.

For any (e.g., one or more including all) of Figures 7 to 10, the message comprising the indication for changing an active TCI state from the first TCI state to the second TCI state (and hence the identification of the at least one second CSI-RS resource) may be comprised in downlink control information. For any (e.g., one or more including all) of Figures 7 to 10, the first message and/or second message may be a downlink control information message, and/or a medium access control, MAC, message.

For any (e.g., one or more including all) of Figures 9 and 10, the at least one second CSI-RS resource may be at least one of the following: the at least one second CSI-RS resource is a periodic CSI-RS resource; the at least one second CSI-RS resource is configured for CSI reporting; or the at least one second CSI-RS resource is a periodic CSI-RS resource and the periodic CSI-RS resource is configured for CSI reporting.

Figures 11 and 12 illustrate methods that may be performed by interacting apparatus. The examples of Figures 11 and 12 highlight how an apparatus may determine what measurement information to report (e.g., which periodic CSI-RS measurements are to be reported).

Figure 11 illustrates a method that may be performed by an apparatus such as a UE. The apparatus may be configured as described above in connection with Figure 3.

During 1101, the apparatus obtains, from a network access node, downlink control information comprising an indication to switch (e.g., switch an active TCI state) from an old transmission configuration indicator, TCI, state to a new TCI state, wherein the new TCI state comprises a configuration identifying at least one new channel state information, CSI, reference signal resource(s) for periodic CSI reference signal reporting. The configuration may be provided via the above-mentioned second mapping of Figure 7 and/or via the above-mentioned explicit indication of Figure 7.

The at least one new CSI reference signal resource(s) may be used for performing CSI acquisition.

The apparatus of Figure 11 may perform at least one measurement on the at least one new CSI reference signal resource(s), and periodically reporting the at least one measurement and/or a signal quality metric determined using the at least one measurement to the network access node.

The apparatus may determine that a next transmission occasion for performing periodic CSI reference signal reporting is within a predetermined time of applying said new TCI state (e.g., is within the above-mentioned application time), and based on said determining, cause a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state. The report may be a periodic CSI reference signal report.

Figure 12 illustrates a method that may be performed by an apparatus. The apparatus may be an apparatus of a network access node, such as described in relation to Figure 2. The network access node may be the network access node described in connection with Figure 11.

During 1201, the apparatus provides, to a user equipment, downlink control information comprising an indication to switch from an old transmission configuration indicator, TCI, state to a new TCI state, wherein the new TCI state comprises a configuration identifying at least one new channel state information, CSI, reference signal resource for periodic CSI reference signal reporting by the user equipment.

The apparatus of Figure 12 may obtain periodic CSI reference signal reporting of at least one measurement on the new CSI reference signal resources and/or a signal quality metric corresponding to the at least one measurement.

The apparatus of Figure 12 may use the periodic CSI reference signal reporting to determine at least one communication parameter for communications between the apparatus and the user equipment on a beam corresponding to the new TCI state, and communicate with the user equipment using the at least one communication parameter.

In any (e.g., one or more, including all) of the methods of Figures 11 and 12, the identification of the at least one new CSI reference signal resource(s) may be comprised in the same signalling as the new TCI state (e.g., as described above with reference to the explicit indication mentioned in connection with the apparatus of Figure 7).

In any (e.g., one or more, including all) of the methods of Figures 11 and 12, the identification of the at least one new CSI reference signal resource(s) may be comprised in different signalling to the new TCI state (e.g., in the case of the first mapping described above with reference to the apparatus of Figure 7).

In any (e.g., one or more, including all) of the methods of Figures 11 and 12, the identification of at least one previous CSI reference signal resource and/or the identification of the at least one new CSI reference signal resource(s) may be comprised a media access control message and/or in a DCI message.

In any (e.g., one or more, including all) of the methods of Figures 11 and 12, the at least one new CSI reference signals resource(s) may be periodic in time and/or frequency.

In any (e.g., one or more, including all) of the methods of Figures 11 and 12, the old TCI state may comprise a configuration identifying at least one old channel state information, CSI, reference signal resource(s) for periodic CSI reference signal reporting, and the at least one old CSI reference signal resource(s) may correspond to a first beam direction and the at least one new CSI reference signal resource(s) corresponds to a second beam direction.

In any (e.g., one or more, including all) of the methods of Figures 11 and 12, the apparatus may maintain at least one first mapping that maps the old transmission control indicator, TCI, state to an old reference signal and the new TCI state to a new reference signal, wherein the old and new reference signals have different beam directions. This may be as described above in relation to Figure 7, where the term "old" corresponds to the term "first", and the term "new" corresponds to the term "second".

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
(c) a combination of analog and/or digital hardware circuit(s) with software/firmware and
(d) any portions of hardware processor(s) with software (including digital signal processor(s)), software, and memory(ies) that work together to cause an apparatus, such as a mobile phone or server, to perform various functions) and
(e) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising means for:
obtaining, from a network access node, downlink control information comprising an indication to switch from an old transmission configuration indicator, TCI, state to a new TCI state, wherein the new TCI state comprises a configuration identifying at least one new channel state information, CSI, reference signal resource(s) for periodic CSI reference signal reporting, and wherein the identification of the at least one new CSI reference signal resource(s) is comprised in the same signalling as the new TCI state.

2. An apparatus as claimed in claim 1, further comprising means for using the at least one new CSI reference signal resource(s) for performing CSI acquisition.

3. An apparatus as claimed in any preceding claim, comprising means for:
performing at least one measurement on the at least one new CSI reference signal resource(s); and
periodically reporting the at least one measurement and/or a signal quality metric determined using the at least one measurement to the network access node.

4. An apparatus as claimed in any preceding claim, further comprising means for:
determining that a next transmission occasion for performing periodic CSI reference signal reporting is within a predetermined time of applying said new TCI state; and
based on said determining, causing a report to be signalled to the network access node during the next transmission occasion, wherein the report comprises at least one measurement performed using at least one CSI reference signal resource corresponding to the old TCI state and/or a signal quality metric determined using the at least one measurement performed using at least one CSI reference signal resource corresponding to the old TCI state.

5. An apparatus comprising means for:
providing, to a user equipment, downlink control information comprising an indication to switch from an old transmission configuration indicator, TCI, state to a new TCI state, wherein the new TCI state comprises a configuration identifying at least one new channel state information, CSI, reference signal resource for periodic CSI reference signal reporting by the user equipment, and wherein the identification of the at least one new CSI reference signal resource(s) is comprised in the same signalling as the new TCI state.

6. An apparatus as claimed in claim 5, further comprising means for:
obtaining periodic CSI reference signal reporting of at least one measurement on the new CSI reference signal resources and/or a signal quality metric corresponding to the at least one measurement.

7. An apparatus as claimed in claim 6, further comprising means for:
using the periodic CSI reference signal reporting to determine at least one communication parameter for communications between the apparatus and the user equipment on a beam corresponding to the new TCI state; and
communicating with the user equipment using the at least one communication parameter.

8. An apparatus as claimed in any preceding claim, wherein an identification of at least one previous CSI reference signal resource and/or the identification of the at least one new CSI reference signal resource(s) is comprised a media access control message.

9. An apparatus as claimed in any preceding claim, wherein the at least one new CSI reference signals resource(s) are periodic in time and/or frequency.

10. An apparatus as claimed in any preceding claim, wherein the old TCI state comprises a configuration identifying at least one old channel state information, CSI, reference signal resource(s) for periodic CSI reference signal reporting, and wherein the at least one old CSI reference signal resource(s) corresponds to a first beam direction and the at least one new CSI reference signal resource(s) corresponds to a second beam direction.

11. An apparatus as claimed in any preceding claim, further comprising means for maintaining at least one first mapping that maps the old transmission control indicator, TCI, state to an old reference signal and the new TCI state to a new reference signal, wherein the old and new reference signals have different beam directions.

12. A method for an apparatus, the method comprising:
obtaining, from a network access node, downlink control information comprising an indication to switch from an old transmission configuration indicator, TCI, state to a new TCI state, wherein the new TCI state comprises a configuration identifying at least one new channel state information, CSI, reference signal resource(s) for periodic CSI reference signal reporting, and wherein the identification of the at least one new CSI reference signal resource(s) is comprised in the same signalling as the new TCI state.

13. A computer program comprising instructions which, when the program is executed by an apparatus, cause the apparatus to at least perform:
obtaining, from a network access node, downlink control information comprising an indication to switch from an old transmission configuration indicator, TCI, state to a new TCI state, wherein the new TCI state comprises a configuration identifying at least one new channel state information, CSI, reference signal resource(s) for periodic CSI reference signal reporting, and wherein the identification of the at least one new CSI reference signal resource(s) is comprised in the same signalling as the new TCI state.

14. A method for an apparatus, the method comprising:
providing, to a user equipment, downlink control information comprising an indication to switch from an old transmission configuration indicator, TCI, state to a new TCI state, wherein the new TCI state comprises a configuration identifying at least one new channel state information, CSI, reference signal resource for periodic CSI reference signal reporting by the user equipment, and wherein the identification of the at least one new CSI reference signal resource(s) is comprised in the same signalling as the new TCI state.

15. A computer program comprising instructions which, when the program is executed by an apparatus, cause the apparatus to at least perform:
providing, to a user equipment, downlink control information comprising an indication to switch from an old transmission configuration indicator, TCI**,** state to a new TCI state, wherein the new TCI state comprises a configuration identifying at least one new channel state information, CSI, reference signal resource for periodic CSI reference signal reporting by the user equipment, and wherein the identification of the at least one new CSI reference signal resource(s) is comprised in the same signalling as the new TCI state.
